(19) Europäisches Patentamt
European Patent Office
Office européen des brevets

(11) **EP 3 063 679 B1**

(12) **FASCICULE DE BREVET EUROPEEN**

(45) Date de publication et mention
de la délivrance du brevet:
**24.03.2021 Bulletin 2021/12**

(51) Int Cl.:
***G06F 30/00*** *(2020.01)*     *G06F 113/16* *(2020.01)*
*G06F 119/08* *(2020.01)*

(21) Numéro de dépôt: **14824882.6**

(22) Date de dépôt: **23.10.2014**

(86) Numéro de dépôt international:
**PCT/FR2014/052697**

(87) Numéro de publication internationale:
**WO 2015/063395 (07.05.2015 Gazette 2015/18)**

(54) **PROCÉDÉ DE CARACTÉRISATION D'UN TORON DE CÂBLES ÉLECTRIQUES**

VERFAHREN ZUR CHARAKTERISIERUNG EINES STROMKABELSTRANGS

METHOD FOR CHARACTERISING A STRAND OF ELECTRIC CABLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.10.2013 FR 1360483**

(43) Date de publication de la demande:
**07.09.2016 Bulletin 2016/36**

(73) Titulaire: **Safran Electrical & Power
31702 Blagnac Cedex (FR)**

(72) Inventeur: **ALBERO, Franck
F-31830 Plaisance du Touch (FR)**

(74) Mandataire: **Cabinet Beau de Loménie
158, rue de l'Université
75340 Paris Cedex 07 (FR)**

(56) Documents cités:
**DE-A1-102011 110 253**    **FR-A1- 2 970 579**
**US-A1- 2011 145 773**    **US-B2- 7 676 771**

• **R C Van Benthem ET AL: "Thermal analysis of
wiring for weight reduction and improed
savety", , 2 December 2011 (2011-12-02), pages
1-26, XP055582508, Internet Retrieved from the
Internet:
URL:https://www.google.de/url?sa=t&rct=j&q
=&esrc=s&source=web&cd=1&ved=2ahUKEwjE
tMDp
4eXhAhXSDewKHSFEAgQQFjAAegQIARAC&url
=https ://reports.nlr.nl/xmlui/bitstream/handle/1
0921/145/TP-2011-469.pdf?sequence=1&usg=A
O vVaw3mgLW1RhspHEzKR0RhB7K9 [retrieved
on 2019-04-23]**

**Description**

Contexte technique

L'invention s'inscrit dans le domaine des procédés de caractérisation de systèmes électriques à usage industriel, et notamment de systèmes de câblage pour le transfert de puissance électrique et éventuellement d'informations numériques. Le document US 7,676,771 B2 décrit un procédé de caractérisation et d'optimisation d'un réseau électrique. Le document avec le numéro de rapport NLR-TP-2011-469, Nationaal Lucht- en Ruimtevaartlaboratrium NLR, R.C. Van Benthem, et al. : "Thermal analysis of wiring for weight réduction and improved savety" décrit un procédé de caractérisation d'un toron de câbles électriques pour améliorer leur dimensionnement et leur utilisation.

La caractérisation vise à adapter au mieux la conception ou l'utilisation des systèmes concernés.

Les systèmes de câblage auxquels l'invention s'applique sont notamment, mais pas exclusivement, les systèmes de câblage pour aéronefs, par exemple les systèmes de câblage qui transportent à la fois la puissance électrique nécessaire à l'alimentation de charges électriques embarquées et des signaux de communication par réseaux. L'invention s'applique aussi à des systèmes de câblage transportant uniquement de la puissance.

Les câbles auxquels on s'intéresse peuvent être des câbles en cuivre ou en aluminium, blindés ou non blindés, rassemblés en torons homogènes ou hétérogènes, c'est-à-dire des fagots de câbles identiques, similaires ou différents, et cheminant parallèlement, assemblés à l'aide de colliers ou d'attaches disposés par exemple tous les 5 cm.

Lors de la conception et de l'utilisation des torons de câbles, il convient d'être attentif aux contraintes thermiques que ces câbles vont subir. Il est notamment courant de fixer une limite maximale d'échauffement (puissance dégagée par effet Joule) pour les câbles, pour limiter les pertes par effet joule, ainsi qu'une limite maximale de température et/ou d'échauffement pour que les opérateurs humains de maintenance ne risquent pas de brulure lors de l'intervention sur les câbles et que les câbles et leur environnement ne soient pas endommagés.

Il convient également, pour la conception et l'utilisation des torons, de prendre en compte la chute de tension autorisée entre la charge et la source électrique, dans le cas des câbles de transfert de puissance électrique, en fonction du type de réseau d'alimentation, par exemple un réseau DC28, AC115 ou AC230. On considère l'alimentation maximum du câble et sa résistance électrique, corrigée ou non en température, en prenant en compte, en cas de correction, la température maximale évoquée ci-dessus, ce qui constitue une approximation conservative très éloignée d'un calcul optimal. A l'inverse l'absence de correction amène à des résultats qui sont également très loin de la réalité. Il convient enfin de prendre en compte la résistance à la tension mécanique, de manière à prévenir l'endommagement par arrachement, coupure partielle ou totale, liés à des efforts mécaniques qui pourraient être appliqués sur le câble. Cet aspect de la conception est traité par des règles empiriques qui ne sont pas abordées ici.

La présente divulgation s'intéresse à améliorer la prise en compte des contraintes thermiques et des chutes de tension. Elle vise à apporter une amélioration dans un domaine où l'on raisonne souvent en considérant des torons homogènes, ne tenant pas compte de l'hétérogénéité des câbles présents, et ne considérant notamment qu'un taux unique de chargement électrique des câbles, sans spécifier si ces câbles chauffent ou non, alors qu'un câble de puissance et un câble de communication réseau ne chauffent pas de la même manière. Ce taux unique de chargement est choisi en considérant une unique configuration du système, par exemple l'avion, typiquement en considérant que tous les équipements fonctionnent en même temps, que la pression est minimale, et que les températures sont maximales. Bien sûr cette hypothèse est excessivement conservative, puisque certains équipements, comme les actionneurs de trains d'atterrissage, ne sont actifs que quelques secondes pendant le vol. De plus, cette manière de procéder revient à imposer des contraintes incompatibles, puisque, par exemple, les circuits d'alimentation principale et de secours d'un équipement donné ne sont jamais alimentés simultanément, ou par exemple la température maximale n'est jamais atteinte en même temps que la pression minimale.

En pratique, ces méthodes antérieures sont basées sur des abaques très générales, et impliquent le calcul de la température de chaque câble, puis la comparaison des températures ainsi calculées avec la température maximale admissible. Des marges très importantes sont prises du fait que les calculs sont menés câble par câble sans prendre en compte la structure du toron, et aussi parce que les abaques, du fait de leur caractère général, sont très conservatives.

Une méthode plus coûteuse en calcul est connue sous le nom de méthode multi-physique, car elle implique une simulation complète sur le plan électrique et thermique. Elle implique des calculs temporels, avec des intégrations simulant les phases transitoires pour calculer les températures de chaque câble pour chaque branche du toron correspondant à une zone de l'avion et des diamètres donnés des câbles. La température atteinte est comparée avec la température maximale admissible.

Un tel calcul permet de diminuer les marges prises dans le dimensionnement des câbles et des torons mais est lourd et impraticable pour des systèmes impliquant de nombreux câbles ou une complexité trop importante des liaisons électriques, comme c'est le cas pour le câblage des avions, car il implique pour chaque système à étudier, la génération préalable d'un modèle, l'ouverture de celui-ci pour chaque modélisation, la modification des paramètres, l'exécution de la simulation, la récupération des résultats et la fermeture du modèle, ce qui est fortement contraignant.

**EP 3 063 679 B1**

Définition de l'invention et avantages associés

Pour résoudre cette difficulté et apporter une réponse pratique au problème industriel complexe évoqué ci-dessus, il est proposé un procédé de caractérisation d'un toron de câbles électriques selon la revendication 1, comprenant la considération pour au moins une température de surface des câbles, d'une part d'une somme de flux thermiques calculés pour chaque câble pour l'effet d'échauffement dû à la résistance électrique du câble parcouru par un courant électrique, et d'autre part d'un flux thermique calculé pour la chaleur dégagée dans son environnement par le toron, pour rendre compatibles le dimensionnement des câbles et leur utilisation.

Grâce à ces principes, on est en mesure, pour un coût en termes de calculs réduit, d'optimiser la conception ou l'utilisation des torons de câbles, et notamment de les concevoir en diminuant leur masse, tout en respectant les contraintes d'utilisation. Les calculs, tout en étant fait de manière conservative de manière à garantir la fiabilité de la solution retenue, sont plus précis que ceux obtenus par les solutions antérieures.

La considération de ladite somme de flux et dudit flux peut notamment comprendre leurs calculs, notamment le calcul du flux calculé pour la chaleur dégagée, à une température de surface des câbles donnée constituant une contrainte à respecter et la comparaison des valeurs numériques ainsi calculées. La considération de ladite somme de flux entrants et dudit flux sortant peut aussi comprendre une résolution d'équation pour obtenir la température de surface des câbles atteinte réellement en fonctionnement.

Dans certains modes de réalisation, une comparaison de ladite somme de flux et dudit flux est effectuée à la température de surface des câbles maximale de fonctionnement sans dégradation des câbles, à la température de surface des câbles maximale de fonctionnement garantissant la sécurité d'opérateurs humains agissant sur les câbles.

Par ailleurs, la comparaison de ladite somme de flux et dudit flux peut être menée en utilisant les intensités de courant correspondant aux valeurs d'échauffement maximal de fonctionnement limitant pour chaque câble les pertes énergétiques en ligne au niveau recommandé. Alternativement, elle est effectuée en utilisant des intensités de courant correspondant à une utilisation prévue pour les câbles.

Dans d'autres modes de réalisation, une comparaison de ladite somme de flux et dudit flux est effectuée à différentes températures pour déterminer la température atteinte réelle.

L'invention aussi comprendre une évaluation, pour au moins un câble de puissance du toron, d'une chute de tension calculée entre les deux extrémités du câble.

Dans certaines applications de l'invention, on effectue un design préliminaire du toron de câbles en prescrivant le diamètre des câbles ou en recommandant l'exclusion d'un ou plusieurs câbles du toron.

On peut aussi modifier un design de toron pour diminuer la masse du toron tout en respectant une contrainte de température de fonctionnement. Dans un mode de réalisation, on compare également le flux thermique sortant et la capacité de dissipation thermique de l'environnement pour lequel le toron est conçu. Cela permet d'anticiper un éventuel risque de surchauffe de cet environnement, dommageable pour cet environnement, mais remettant aussi en cause la température ambiante sur laquelle les calculs de dimensionnement du toron sont basés.

Préférentiellement, le matériau et le chargement électrique propres de chaque câble du toron sont pris en compte dans les calculs de flux.

Toujours préférentiellement, les câbles composant une liaison électrique cheminant dans plusieurs torons de câbles, peuvent avoir une section variable sur leur longueur.

Dans une application industrielle particulière, le toron est un toron pour aéronef. Dans ce cas, il est proposé que les cycles de chargement électrique des équipements, l'évolution de la température et de la pression des zone de l'aéronef et les caractéristiques de zone de l'aéronef pour le calcul d'échauffement des torons pour chaque phase de vol puissent être pris en compte.

Il est aussi proposé un toron de câbles électriques selon la revendication 14.

L'invention va maintenant être décrite en relation avec les figures annexées.

Liste des figures

La figure 1 présente un toron de câbles.
La figure 2 présente une illustration des principes de l'invention.
La figure 3 présente un exemple de réalisation de l'invention.

Mode de réalisation détaillé de l'invention

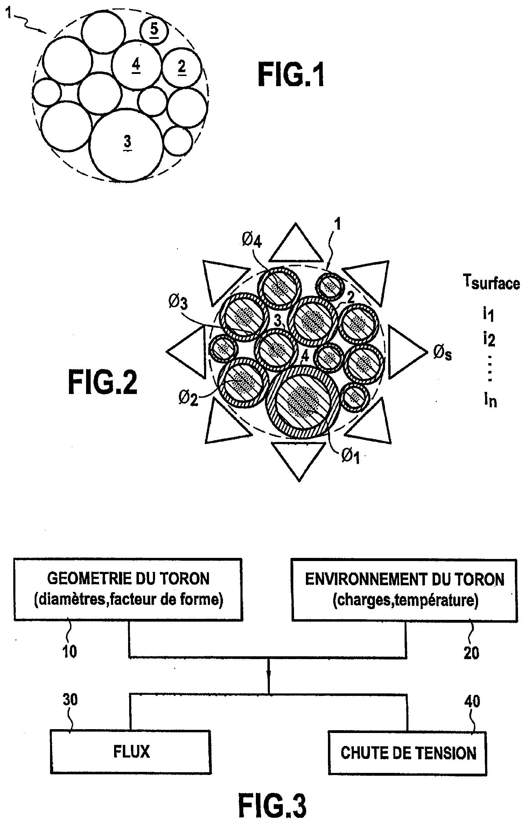

En **figure 1,** on a représenté un exemple de toron 1 de câbles auquel s'applique l'invention, vu en coupe. Il est constitué de câbles 2, 3, 4... de différents diamètres, liés entre eux par des colliers disposés par exemple tous les

3

5 cm (non représentés). Les câbles, qui sont globalement de section circulaire sont pressés les uns contre les autres. Certains sont en aluminium et d'autres en cuivre, voire en d'autres matériaux. Certains sont des câbles d'alimentation électrique ou de transmission de puissance électrique, par exemple des câbles d'alimentation de trains d'atterrissage ou d'armoires électriques dans un aéronef, et d'autres des câbles de communication de données transmises d'un nœud d'un réseau à un autre nœud du réseau de télécommunications, par exemple un réseau embarqué dans un aéronef.

En **figure 2**, on a présenté une illustration des principes de l'invention. Il est prévu, conformément à l'invention, de calculer pour une température de surface des câbles $T_{surface}$ supposée constante, c'est-à-dire en régime stabilisé, et des intensités circulantes dans les câbles $i_1$, $i_2$, ..., $i_n$ correspondant à l'utilisation envisagée des câbles, un flux d'énergie thermique global sortant $\Phi_s$ calculé pour l'ensemble du toron en prenant en compte l'environnement (température et pression) dans lequel ledit toron est situé, ainsi que les flux énergétiques entrants $\Phi_1$, $\Phi_2$,... $\Phi_n$ pour les différents câbles. La somme des flux entrants $\Phi_1$, $\Phi_2$,... $\Phi_n$ est ensuite comparée au flux sortant $\Phi_s$.

Dans ce calcul, les phases transitoires sont ignorées. Mais cette solution apporte toutes les fonctionnalités offertes par la simulation multi-physique, tout en minimisant l'effort de calcul.

Au lieu de comparer la température atteinte à la température maximale autorisée, comme cela était fait antérieurement, on compare les flux entrants et sortants simulés à une température de surface donnée. Ainsi, on vérifie si un échauffement maximum autorisé est dépassé. Il s'agit de réchauffement au niveau de la peau du toron ou de la peau des câbles, de manière à mener un calcul conservatif. Ainsi, avec un câblage dimensionné en suivant cette méthode, la température réelle atteinte pour les intensités circulantes dans les câbles $i_1$, $i_2$, ..., $i_n$ est nécessairement inférieure à la température maximale autorisée.

Le procédé est représenté plus en détails en **figure 3.** Il est tenu compte de la géométrie du toron 10, incluant notamment, mais pas nécessairement seulement, les diamètres des câbles et les facteurs de forme des câbles et du toron. Il est aussi tenu compte de l'environnement du toron 20, incluant notamment, mais pas nécessairement seulement, les charges électriques appliquées à chacun des câbles, la température et la pression ambiante.

Le procédé permet d'obtenir des résultats quant au respect, par le toron étudié, dans les conditions envisagées, d'une contrainte sur les flux thermiques 30, et d'une contrainte sur la chute de tension 40 observée sur le tronçon de toron modélisé.

Le calcul de la somme des flux énergétiques entrants est basé sur la formule $\phi_{entrant} = \Sigma_{câbles}$ (*Résistance lineique * Longueur tronçon * Courants*$^2$).

Le calcul du flux énergétique sortant est mené avec la température maximale autorisée en surface, évoquée plus haut et en prenant en compte les caractéristiques de l'environnement. Ce flux se décompose en un flux radiatif et un flux convectif est basé sur les formules

$$\phi_{sor\tan t} = \phi_{Radiatif} + \phi_{Convectif}$$

$$\phi_{Radiatif} = Emissivité * Facteur\ de\ forme * \sigma * Surface * (T_{surface}^4 - T_{ambiante}^4)$$

$$\phi_{Convectif} = h_{convectif} * Surface * (T_{surface} - T_{ambiante}),$$

$\sigma$ représentant la constante de Stefan Boltzmann et la constante h étant fixée en fonction de la pression et de la température, donc notamment de l'altitude, et pour simplifier de la phase de vol. On rappelle que l'émissivité est quant à elle liée au matériau irradiant, ici chacun des câbles ou éventuellement la protection appliquée sur ces câbles (gaines contre le feu, les interférences électromagnétiques, les agressions mécaniques,...).

On compare les flux entrant et sortant pour déterminer si la contrainte sur le flux thermique 30 est respectée, celle-ci n'étant pas respectée si le flux entrant est supérieur au flux sortant.

On calcule également les chutes de tension attendues pour chaque câble, avec les températures et intensité évoquées. Ce calcul de chute de tension est fait avec la loi d'ohm U = RI, R étant préférentiellement corrigé avec la température maximum autorisée ou la température du toron déterminée, et est automatisé. On procède éventuellement à une somme des chutes de tension élémentaires calculées pour chaque tronçon de câble. La chute de tension ainsi calculée est comparée à la chute maximale autorisée dans l'application, en fonction par exemple de spécifications établies par le donneur d'ordre, qui tiennent compte de l'environnement du toron. C'est ainsi qu'on vérifie la contrainte sur la chute de tension 40.

Si les contraintes 30 et 40 sont respectées, il est alors possible de réitérer le processus avec un dimensionnement plus faible des câbles, pour ainsi diminuer la masse de l'ensemble du câblage, jusqu'à ce que les contraintes ne soient plus respectées. Le câblage est finalement dimensionné en fonction de ces résultats.

La méthode mathématique ainsi présentée peut être appliquée en phase de pré-design, ce qui permet d'avoir une première estimation des sections à utiliser pour chaque câble, même si le système est incomplet. Cela peut notamment aider à estimer le diamètre d'un tronçon et éventuellement à écarter, dans la phase de conception, certains câbles si le diamètre estimé du toron dépasse le maximum autorisé.

Cette méthode de dimensionnement peut aussi être appliquée pour la vérification d'une configuration existante, ce qui permet de connaitre rapidement si les contraintes électrothermiques sont respectées sur un appareil. Si ce n'est pas le cas, les contraintes violées sont toutes relevées et signalées pour changer les câbles. Cette méthode de dimensionnement peut aussi être appliquée pour la correction d'une configuration violant une ou plusieurs contraintes. Elle permet ainsi, par le biais d'une automatisation, de modifier les sections des câbles afin de corriger les contraintes violées d'un système.

Enfin, la méthode peut être utilisée pour l'optimisation d'une configuration. Une automatisation permet de modifier les sections de câbles afin d'optimiser celles-ci sur le critère de masse du système tout en respectant l'ensemble des exigences thermiques et électriques.

Cette solution améliore le dimensionnement des câbles car elle permet un gain de masse significatif sur le câblage avion, une meilleure connaissance des flux thermiques dans les différentes zones de l'avion, une meilleure connaissance des pertes thermiques dues au câblage, une détermination rapide des contraintes violées, y compris sur un système de grande dimension, par une possibilité d'automatisation des calculs, et l'optimisation automatisée du dimensionnement de l'ensemble du câblage avion.

Dans un mode de réalisation particulier, on s'intéresse, après avoir calculé le flux thermique sortant, à sa compatibilité avec l'environnement dans lequel il est prévu d'installer le toron, par exemple un cheminement sous plancher entre le plancher passager d'un avion de ligne, et le plafond d'une soute, ou encore un cheminement entre l'habillage de la cabine passager et la peau de l'avion, qui sont dans les deux cas des espaces confinés, avec une relativement faible aération. On vérifie que la température de surface du toron reste similaire à celle déterminée précédemment, et/ou compatible avec les spécifications de sécurité et de fonctionnement. L'invention n'est pas limitée aux modes de réalisation présentés, mais s'étend à toutes les variantes dans le cadre de la portée des revendications.

## Revendications

**1.** Procédé de caractérisation d'un toron (1) de câbles électriques (2, 3, 4...) le toron (1) de câbles électriques (2, 3, 4...) comportant une pluralité de câbles (2, 3, 4...) disposés en parallèle, le procédé comprenant la considération pour au moins une température de surface des câbles ($T_{surface}$), d'une part d'une somme de flux thermiques entrants ($\Phi_1$, $\Phi_2$,... $\Phi_n$) calculés pour chaque câble (2, 3, 4...) pour l'effet d'échauffement dû à la résistance électrique du câble parcouru par un courant électrique ($i_1$, $i_2$, ... $i_n$), et d'autre part d'un flux thermique sortant ($\Phi_s$) calculé pour la chaleur dégagée dans son environnement par le toron (1), pour rendre compatibles le dimensionnement des câbles (2, 3, 4...) et leur utilisation en vérifiant que réchauffement maximum autorisé n'est pas dépassé, **caractérisé en ce qu'**il comprend en outre :

   - une comparaison de ladite somme de flux thermiques entrants au flux thermique sortant pour déterminer si le toron respecte une contrainte de flux thermique (30) ; et
   - une évaluation, pour au moins un câble de puissance du toron, d'une chute de tension calculée entre les deux extrémités du câble pour déterminer si le toron respecte une contrainte de chute de tension (40).

**2.** Procédé de caractérisation selon la revendication 1, dans lequel la considération de ladite somme de flux entrants et dudit flux sortant comprend leurs calculs à une température donnée constituant un échauffement maximum autorisé et la comparaison des valeurs numériques des flux thermiques entrants et des flux thermiques sortants pour vérifier que l'échauffement maximum autorisé n'est pas dépassé.

**3.** Procédé de caractérisation selon la revendication 1, dans lequel la considération de ladite somme de flux entrants et dudit flux sortant comprend une résolution d'équation pour obtenir une température atteinte réellement en fonctionnement.

**4.** Procédé de caractérisation selon l'une des revendications 1 à 3, dans lequel une comparaison de ladite somme de flux entrants et dudit flux sortant est effectuée à la température maximale de fonctionnement sans dégradation des câbles.

5. Procédé de caractérisation selon l'une des revendications 1 à 4, dans lequel une comparaison de ladite somme de flux entrants et dudit flux sortant est effectuée à la température maximale de fonctionnement garantissant la sécurité d'opérateurs humains agissant sur les câbles.

6. Procédé de caractérisation selon l'une des revendications 1 à 5, dans lequel une comparaison de ladite somme de flux entrants et dudit flux sortant est effectuée avec les intensités de courant correspondant aux échauffements maximaux de fonctionnement autorisés pour limiter les pertes par effet joule dans les câbles.

7. Procédé de caractérisation selon l'une des revendications 1 à 6, dans lequel une comparaison de ladite somme de flux entrants et dudit flux sortant est effectuée à différentes températures pour déterminer la température atteinte réelle.

8. Procédé de caractérisation selon l'une des revendications 1 à 7, pour effectuer un design préliminaire du toron de câbles en prescrivant le diamètre des câbles ou en recommandant l'exclusion d'un ou plusieurs câbles du toron.

9. Procédé de caractérisation selon l'une des revendications 1 à 8, pour modifier un design de toron en diminuant une masse du toron.

10. Procédé de caractérisation selon l'une des revendications 1 à 9, dans lequel on compare également le flux thermique sortant et une capacité de dissipation thermique de l'environnement pour lequel le toron est conçu.

11. Procédé de caractérisation selon l'une des revendications 1 à 10, dans lequel un matériau et un te- chargement propres de chaque câble du toron sont pris en compte dans les calculs de flux.

12. Procédé de caractérisation selon l'une des revendications 1 à 10, dans lequel les câbles composant une liaison électrique cheminant dans plusieurs torons de câbles, peuvent avoir une section variable sur leur longueur.

13. Procédé de caractérisation selon l'une des revendications 1 à 11, dans lequel le toron est un toron pour aéronef, les cycles de chargement des équipements, l'évolution de la température et de la pression des zones de l'aéronef et les caractéristiques de zones de l'aéronef pour le calcul d'échauffement des torons pour chaque phase de vol pouvant être pris en compte.

14. Toron (1) de câbles électriques (2, 3, 4...) comportant une pluralité de câbles (2, 3, 4,...) disposés en parallèle et le toron (1) est fabriqué selon un procédé de fabrication comprenant une caractérisation selon l'une des revendications 1 à 13.

**Patentansprüche**

1. Verfahren zur Charakterisierung eines Strangs (1) von Stromkabeln (2, 3, 4...) wobei der Strang (1) von Stromkabeln (2, 3, 4...) eine Vielzahl von Kabeln (2, 3, 4) umfasst, die parallel angeordnet sind, wobei das Verfahren die Berücksichtigung einerseits einer Summe von Eingangswärmeflüssen ($\Phi_1$, $\Phi_2$, ... $\Phi_n$), die für jedes Kabel (2, 3, 4...) für die Wirkung des Erwärmung aufgrund des elektrischen Widerstands des von einem elektrischen Strom ($i_1$, $i_2$, ... $i_n$) durchflossenen Kabels berechnet werden, und andererseits eines Ausgangswärmesflusses ($\Phi_s$), der für die durch Strang (1) in seiner Umgebung abgestrahlte Wärme berechnet wird, für mindestens eine Oberflächentemperatur der Kabel ($T_{surface}$) umfasst, um die Bemessung der Kabel (2, 3, 4...) und ihre Verwendung verträglich zu machen und dabei zu überprüfen, dass die maximal zulässige Erwärmung nicht überschritten wird, **dadurch gekennzeichnet, dass** es ferner umfasst:

   - einen Vergleich der Summe von Eingangswärmeflüssen mit dem Ausgangswärmefluss, um zu bestimmen, ob der Strang eine Wärmeflussbeschränkung (30) einhält; und
   - für mindestens ein Leistungskabel des Strangs, eine Bewertung eines berechneten Spannungsabfalls zwischen den zwei Enden des Kabels, um zu bestimmen, ob der Strang eine Spannungsabfallbeschränkung (40) einhält.

2. Charakterisierungsverfahren nach Anspruch 1, wobei die Berücksichtigung der Summe von Eingangsflüssen und des Ausgangsflusses ihre Berechnungen bei einer gegebenen Temperatur, die eine maximal zulässige Erwärmung bildet, und den Vergleich der Zahlenwerte der Eingangswärmeflüsse und der Ausgangswärmeflüsse umfasst, um zu überprüfen, dass die maximal zulässige Erwärmung nicht überschritten wird.

3. Charakterisierungsverfahren nach Anspruch 1, wobei die Berücksichtigung der Summe von Eingangsflüssen und des Ausgangsflusses eine Lösung einer Gleichung umfasst, um eine tatsächlich beim Betrieb erreichte Temperatur zu erhalten.

4. Charakterisierungsverfahren nach einem der Ansprüche 1 bis 3, wobei ein Vergleich der Summe von Eingangsflüssen und des Ausgangsflusses bei der maximalen Betriebstemperatur ohne Verschlechterung des Zustands der Kabel durchgeführt wird.

5. Charakterisierungsverfahren nach einem der Ansprüche 1 bis 4, wobei ein Vergleich der Summe von Eingangsflüssen und des Ausgangsflusses bei der maximalen Betriebstemperatur durchgeführt wird, die die Sicherheit menschlicher Bediener, die an den Kabeln wirken, gewährleistet.

6. Charakterisierungsverfahren nach einem der Ansprüche 1 bis 5, wobei ein Vergleich der Summe von Eingangsflüssen und des Ausgangsflusses mit Stromstärken durchgeführt wird, die den maximal zulässigen Betriebserwärmungen zum Begrenzen der Verluste durch Joule-Effekt in den Kabeln entspricht.

7. Charakterisierungsverfahren nach einem der Ansprüche 1 bis 6, wobei ein Vergleich der Summe von Eingangsflüssen und des Ausgangsflusses bei verschiedenen Temperaturen durchgeführt wird, um die tatsächlich erreichte Temperatur zu bestimmen.

8. Charakterisierungsverfahren nach einem der Ansprüche 1 bis 7 zum Durchführen eines vorläufigen Entwurfs des Kabelstrangs durch Vorschreiben des Durchmessers der Kabel oder durch Empfehlen des Ausschlusses von einem oder mehreren Kabeln des Strangs.

9. Charakterisierungsverfahren nach einem der Ansprüche 1 bis 8 zum Ändern einer Stranggestaltung durch Vermindern einer Masse des Strangs.

10. Charakterisierungsverfahren nach einem der Ansprüche 1 bis 9, wobei auch der Ausgangswärmefluss und eine Wärmeabstrahlungskapazität der Umgebung verglichen werden, für die der Strang gestaltet wird.

11. Charakterisierungsverfahren nach einem der Ansprüche 1 bis 10, wobei bei den Flussberechnungen ein Material und eine Ladung, die jedem Kabel des Strangs eigen sind, berücksichtigt werden.

12. Charakterisierungsverfahren nach einem der Ansprüche 1 bis 10, wobei die Kabel, die eine elektrische Verbindung bilden, die in mehreren Kabelsträngen verläuft, über ihre Länge einen variablen Querschnitt aufweisen können.

13. Charakterisierungsverfahren nach einem der Ansprüche 1 bis 11, wobei der Strang ein Strang für ein Luftfahrzeug ist, wobei die Ladezyklen der Ausrüstung, die Entwicklung der Temperatur und des Drucks der Zonen des Luftfahrzeugs und die Eigenschaften der Zonen des Luftfahrzeugs für die Berechnung der Erwärmung der Stränge für jede Flugphase berücksichtigt werden können.

14. Strang (1) von Stromkabeln (2, 3, 4...), der eine Vielzahl von Kabeln (2, 3, 4,...) umfasst, die parallel angeordnet sind, und wobei der Strang (1) nach einem Herstellungsverfahren hergestellt ist, das eine Charakterisierung nach einem der Ansprüche 1 bis 13 umfasst.

**Claims**

1. A method of characterizing a bundle (1) of electrical cables (2, 3, 4, ...), the bundle of electric cables (2, 3, 4, ...) including a plurality of cables (2, 3, 4, ...) arranged in parallel, the method comprising taking into consideration for at least one surface temperature of the cables ($T_{surface}$), first at least one sum of incoming heat fluxes ($\Phi_1$, $\Phi_2$, ..., $\Phi_n$) calculated for each cable (2, 3, 4, ...) for the heating effect due to the electrical resistance of each cable passing a respective electric current ($i_1$, $i_2$, ..., $i_n$), and second an outgoing heat flux ($\Phi_s$) calculated for the heat given off by the bundle (1) into its environment in order to make the dimensioning of the cables (2, 3, 4, ...) compatible with their use by confirming that an authorized maximum level of heating is not exceeded,
**characterized in that** it further comprises:

- comparing the at least one sum of incoming heat fluxes to the outgoing heat flux to determine whether the bundle satisfies a predetermined heat flux constraint (30); and
- evaluating, for at least one power cable of the bundle, a voltage drop calculated between the two ends of the cable to determine whether the bundle satisfies a predetermined voltage drop constraint (40).

2. A method of characterization according to claim 1, wherein the consideration of said sum of incoming fluxes and said outgoing flux comprises calculating them for a given temperature constituting an authorized maximum level of heating and comparing the numerical values of the incoming fluxes and the outgoing flux to confirm that the maximum level of heating is not exceeded.

3. A method of characterization according to claim 1, wherein the consideration of said sum of incoming fluxes and said outgoing flux comprises solving an equation to obtain a temperature that is actually reached in operation.

4. A method of characterization according to any one of claims 1 to 3, wherein said sum of incoming fluxes and said outgoing flux are compared at the maximum temperature at which the cable can operate without degradation.

5. A method of characterization according to any one of claims 1 to 4, wherein said sum of incoming fluxes and said outgoing flux are compared at the maximum operating temperature that guarantees safety for human operators acting on the cables.

6. A method of characterization according to any one of claims 1 to 5, wherein said sum of incoming fluxes and of said outgoing flux are compared at currents corresponding to the maximum authorized temperature rises in operation for limiting losses by the Joule effect in the cables.

7. A method of characterization according to any one of claims 1 to 6, wherein said sum of incoming fluxes and said outgoing flux are compared at different temperatures in order to determine the temperatures actually reached.

8. A method of characterization according to any one of claims 1 to 7, for performing preliminary design of the cable bundle by determining the diameters of the cables or by recommending that one or more cables be excluded from the bundle.

9. A method of characterization according to any one of claims 1 to 8, for modifying a bundle design by reducing a weight of the bundle.

10. A method of characterization according to any one of claims 1 to 9, wherein a comparison is also made between the outgoing heat flux and the capacity of the environment for which the bundle is designed to dissipate heat.

11. A method of characterization according to any one of claims 1 to 10, wherein a material and a load specific to each cable of the bundle are taken into account when calculating fluxes.

12. A method of characterization according to any one of claims 1 to 10, wherein the cables making up an electrical connection conveyed via a plurality of cable bundles may be of section that varies along their length.

13. A method of characterization according to any one of claims 1 to 11, wherein the bundle is a bundle for aircraft, and when calculating the temperature rise of bundles during each stage of flight it is possible to take account of loading cycles of equipment, of temperature and pressure variations in zones of the aircraft, and of the characteristics of zones of the aircraft.

14. A bundle of electric cables (2, 3, 4, ...) comprising a plurality of cables (2, 3, 4, ...) arranged in parallel and the bundle is fabricated by a method of fabrication including characterization in accordance with any one of claims 1 to 13.

FIG.1

FIG.2

$T_{surface}$

$i_1$

$i_2$

$i_n$

| GEOMETRIE DU TORON (diamètres, facteur de forme) | ENVIRONNEMENT DU TORON (charges, température) |
|---|---|
| 10 | 20 |

| 30 | 40 |
|---|---|
| FLUX | CHUTE DE TENSION |

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7676771 B2

**Littérature non-brevet citée dans la description**

- **R.C. VAN BENTHEM et al.** Nationaal Lucht- en Ruimtevaartlaboratrium NLR. *Thermal analysis of wiring for weight réduction and improved savety*